# EUROPEAN PATENT SPECIFICATION

(11) **EP 1 745 524 B1**
(45) Date of publication and mention of the grant of the patent: **03.08.2011**
(21) Application number: 04731173.3
(22) Date of filing: 05.05.2004
(51) Int. Cl.: H01M 8/14, H01M 8/04, H01M 8/06

(54) **DIFFERENTIAL PRESSURE CONTROL METHOD FOR MOLTEN CARBONATES FUEL CELL POWER PLANTS**
DIFFERENZDRUCK-STEUERVERFAHREN FÜR MOLTEN-CARBONAT-BRENNSTOFFZELLEN-STROMANLAGEN
PROCEDE DE COMMANDE DE LA PRESSION POUR DES CENTRALES ELECTRIQUES A PILES A COMBUSTIBLE A CARBONATES FONDUS

(43) Date of publication of application: 24.01.2007
(73) Proprietor: Ansaldo Fuel Cells S.p.A., Genova (IT)
(72) Inventor: NERVI, Gian, Paolo, I-15015 Cartosio (IT); PARODI, Filippo, I-16036 Recco (IT)
(74) Representative: Di Sciuva, Michele
(86) International application number: PCT/EP2004/004779
(87) International publication number: WO 2005/107003

(56) References cited:
- EP-A- 0 550 892
- GB-A- 2 128 013
- US-A- 5 340 663
- US-A- 5 856 034
- US-A1- 2002 081 471

## Description

The present invention relates to pressurised molten carbonate fuel cell power generation systems which directly converts chemical energy of a fuel into electrical energy.

### Background of the invention

A fuel cell is a device that uses hydrogen (or hydrogen-rich fuel) and oxygen to create electricity by an electrochemical process.

A single fuel cell consists of an electrolyte sandwiched between two thin electrodes (a porous anode and cathode). While there are different fuel cell types, all work on the same principle: hydrogen, or a hydrogen-rich fuel, is fed to the anode where a catalyst separates hydrogen's negatively charged electrons from positively charged ions (protons).

At the cathode, oxygen combines with electrons and, in some cases, with species such as protons or water, resulting in water or hydroxide ions, respectively.

For polymer exchange membrane (PEM) and phosphoric acid fuel cells, protons move through the electrolyte to the cathode to combine with oxygen and electrons, producing water and heat.

For alkaline, molten carbonate, and solid oxide fuel cells, negative ions travel through the electrolyte to the anode where they combine with hydrogen to generate water and electrons. The electrons from the anode side of the cell cannot pass through the membrane to the positively charged cathode; they must travel around it via an electrical circuit to reach the other side of the cell. This movement of electrons is an electrical current.

The amount of power produced by a fuel cell depends upon several factors, such as fuel cell type, cell size, the temperature at which it operates, and the pressure at which the gases are supplied to the cell. Still, a single fuel cell produces enough electricity for only the smallest applications. Therefore, individual fuel cells are typically combined in series into a fuel cell stack. A typical fuel cell stack may consist of hundreds of fuel cells.

Direct hydrogen fuel cells produce pure water as the only emission. This water is typically released as water vapor.

Fuel cell systems can also be fueled with hydrogen-rich fuels, such as methanol, natural gas, gasoline, or gasified coal. In many fuel cell systems, these fuels are passed through "reformers" that extract hydrogen from the fuel. Onboard reforming has several advantages:
First of all it allows the use of fuels with higher energy density than pure hydrogen gas, such as methanol, natural gas, and gasoline. Further, it allows the use of conventional fuels delivered using the existing infrastructure (e.g., liquid gas pumps for vehicles and natural gas lines for stationary source).

High-temperature fuel cell systems can reform fuels within the fuel cell itself - a process called internal reforming - or can use waste heat produced by the fuel cell system to sustain the reforming endothermic reactions (integrated reforming), as disclosed in EP-A-1 321 185.

In addition, impurities in the gaseous fuel can reduce cell efficiency.

The design of fuel cell systems is quite complex and can vary significantly depending upon fuel cell type and application. However, most fuel cell systems consist of four basic components:
- A fuel processor
- An energy conversion device (the fuel cell or fuel cell stack)
- A power converter
- Heat recovery system (typically used in high-temperature fuel cell systems used for stationary applications)

Other components and subsystems are foreseen to control fuel cell humidity, temperature, gas pressure, and wastewater.

The first component of a fuel cell system is the fuel processor. The fuel processor converts fuel into a form useable by the fuel cell. If hydrogen is fed to the system, a processor may not be required or it may be reduced to hydrogen storage and feeding systems.

If the system is powered by a hydrogen-rich conventional fuel such as methanol, gasoline, diesel, or gasified coal, a reformer is typically used to convert hydrocarbons into a gas mixture of hydrogen and carbon compounds called "reformate." In many cases, the reformate is then sent to another reactor to remove impurities, such as carbon oxides or sulfur, before it is sent to the fuel cell stack. This prevents impurities in the gas from binding with the fuel cell catalysts. This binding process is also called "poisoning" since it reduces the efficiency and life expectancy of the fuel cell.

Some fuel cells, such as molten carbonate and solid oxide fuel cells, operate at temperatures high enough that the fuel can be reformed in the fuel cell itself or can use waste heat produced by the fuel cell system to sustain the reforming endothermic reactions.

Both internal and external reforming release carbon dioxide, but less than the amount emitted by internal combustion engines, such as those used in gasoline-powered vehicles, due to high conversion efficiency available with fuel cells.

Fuel cell systems are not primarily used to generate heat. However, since significant amounts of heat are generated by some fuel cell systems - especially those that operate at high temperatures such as solid oxide and molten carbonate systems - this excess energy can be used to supply thermal energy to sustain reforming reactions, to produce steam or hot water or converted to electricity via a gas turbine or other technology. This increases the overall energy efficiency of the systems.

A prior-art device of the type disclosed in the present case is, for example, a fuel cell device as described in the US application 4,904,547.

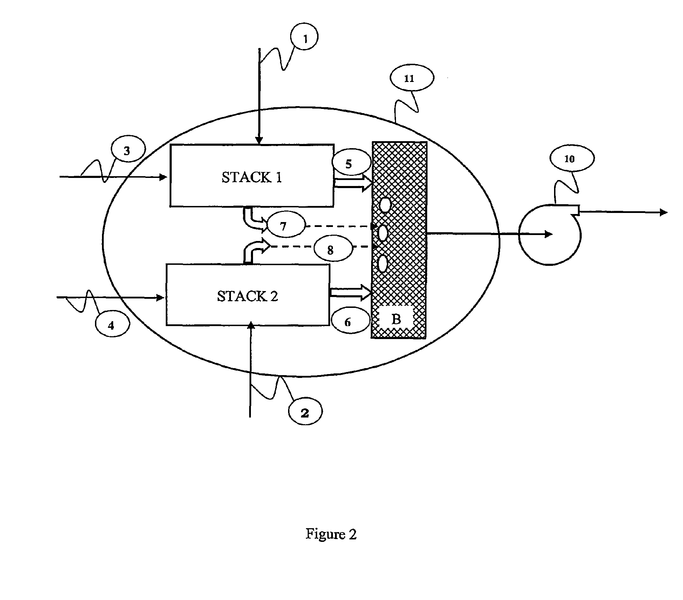

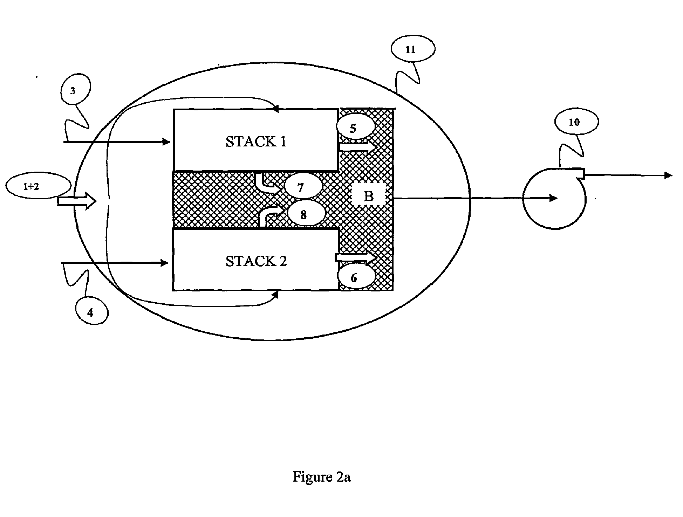

Here, the pressure difference controlling method is schematically illustrated in Fig.2 of US 4,904,547, where a switching valve 11 connects a nitrogen line and a fuel line and is installed outside a vessel while a switching valve 12 connects the nitrogen line and an air line.

The first pressure controller 13 applies a set signal to a fuel differential pressure control valve 4 upon receiving a signal from the first differential pressure detector 14 which detects the differential pressure between the vessel pressure and the anode exhaust. A second pressure controller 15 applies a set signal to the cathode differential pressure control valve 6 upon receiving a signal from the second differential pressure detector 16, which detects the differential pressure between the vessel pressure and the cathode exhaust.

During the functioning, the system pressure is regulated by the pressure control valve 8 and the controllers for the differential control pressure vessel-anode and vessel-cathode are the controller 13 and 15 respectively; switching valves 11 and 12 are closed.

In case of a urgent system stop, valve 7, 3, 5 close, while switching valves 11 and 12 open, allowing the natural decrease of the nitrogen pressure in the vessel. Consequently the pressures of the respective lines lower to the normal pressure according to the pressure control system. In this way the fuel cell can be stopped in a short time with a small amount of nitrogen.

However, the above-described conventional method using the differential pressure control valve cannot ensure that the differential pressure always stays in a predetermined range when pressure varies rapidly or troubles occur in the valves or in the differential pressure meters or an air feed line, a power source or other components. Moreover, the differential pressure control between anode and vessel and between cathode and vessel are independent so that if some problems occur to a single line, there could be an increase in differential pressure between electrodes, causing the breakage of a fuel cell.

Due to the high operating temperature of Molten Carbonates Fuel Cells (hereafter called MCFC), high temperature control valves have to be used, what constitutes an high impact on the total costs of the plant.

Therefore, this conventional method has a problem in reliability and the components employed are very expensive.

GB-2128013-A discloses a fuel cell stack disposed within a pressure vessel and having external reactant gas manifolds; in order to prevent leakage of reactant gas from the manifolds, seals are provided between the manifolds and the stack surfaces, and an inert gas is fed into the pressure vessel at a pressure slightly above the pressure of the reactant gas within the stack.

### Summary of the invention

It is therefore an object of the present invention to provide a MCFC system which allows to avoid the technical disadvantages of the prior art and which is at the same time cost-effective.

This is obtained by means of a molten carbonate fuel cell system according to claim 1. The fuel cell stack is enclosed within a containment vessel and a catalytic burner exhaust is used to control the system operating pressure. Moreover, a highly reliable, simple and low-cost differential pressure control method which is never affected by service interruption or troubles in control valves or in differential control meters or in other components is disclosed, as claimed in claim 8.

The molten carbonate fuel cell system according to the present invention comprises a containment vessel, a fuel cell stack enclosed within the containment vessel and a catalytic combustor next to the vessel in which a mixture of the anodic exhaust, the cathodic exhaust and the vessel exhaust flow and are combusted.

A pressure control valve is located on the combustor exhaust line and a relief valve is positioned on the vessel exhaust line.

This fuel cell system guarantees dynamic pressure balance between the vessel and fuel cell reactants and prevents leakage of the reactants from the fuel cell stack by guiding the anode, cathode and vessel exhaust gases to the inlet of a catalytic burner and by mixing them therein, so that the pressure of these gases are equal to each other.

In this way, it is also possible to avoid an excessive differential pressure between fuel cell and vessel and between the anode and the cathode. Moreover, by excluding differential control valves from the plant, the costs are substantially reduced.

In case of a control failure, this method allows to maintain the system at a constant pressure and temperature without the risk of high differential pressure between electrodes, what could cause breakage of the fuel cell stack.

### Detailed description of the preferred embodiments

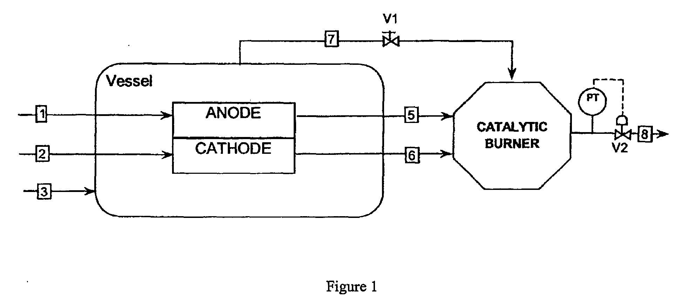

The preferred embodiments of the present invention will be described with reference to Figure 1.

A pressurised fuel feed line 1 is connected to the anode of the fuel cell stack. A pressurised oxidant feed line 2 is introduced into the cathode and inert gas (N₂) air or other mixtures like cathodic exhaust is fed to the containment vessel through line 3.

The system pressure is controlled by the valve V2 downstream of the catalytic burner, the pressure sensor and pressure controller.

Valve V1, located on the vessel exhaust line, maintains constant the required differential pressure between the vessel and the fuel cell reactants in order to prevent leakage of reactants to the vessel atmosphere.

In this case, the anode, the cathode and the vessel exits are all at the same pressure, which is balanced and equilibrated inside the catalytic burner that acts as reference point. Anode and cathode pressures are always equilibrated unless pressure drop occurs in the passage trough the stack.

In this way there are no significant differential pressure changes between anode-cathode and stack-vessel.

When that occurs, they are in a range of some mbar, even if there is a failure on the cathode or anode stream.

The system is closely equilibrated and allows to minimise the risks of differential pressure between electrodes and between the fuel cell stack and the vessel.

The vessel can be at room temperature or higher, the only technical characteristic which has to be modified resides in the valve V1, which can be "fail-open kind", with low pressure drop, abounding or equipped with bypass in the case of his casual shutting.

Furthermore, the valve located downstream of the catalytic burner has an appropriate capacity to avoid the pressure control loss or can be properly redounded.

In comparison with the separate pressure control on the three streams (anode, cathode and vessel), this pressure control device implies that the power plant can be provided with a catalytic burner (CB) or other proper mixing device allowing anode and cathode gas safe mixing/burning where the exhausted gases are guided; setting the valve V1 (or a calibrated orifice) the vessel can be maintained at a slight overpressure on the stack allowing intrinsic safe operation without gas leakage from the stack to the containment vessel; the advantage of a minimum number of control valves; the advantage of an automatic pressure balance (an actual safety for the stack); the advantages of a passive control system without any component that could fail; in the case of control system failure, the advantage that the system temperature and pressure do not need to decrease to room conditions.

Another embodiment of the fuel stack system according to the present invention is shown in Fig. 2.

Here two stacks 1 and 2 are fed by the lines 1-2 at the cathode and by the lines 3-4 at the anode. In this embodiment as well the stacks as the burner (B) are contained inside the vessel 11.

The exhausted anodic gas is brought to the B by means of the conducts 5 and 6. The exhausted cathodic gas is introduced directly into the vessel (arrows 7 and 8) and forms the covering atmosphere. By means of the outlet 10 a slightly low pressure is formed in the B, so that the gas contained in the vessel is aspired inside the B through the indicated openings.

Since the atmosphere in the vessel is constituted by the cathodic gas containing oxygen, meets inside the B the exhausted anodic gas containing hydrogen and the fuel not reacted of the cell and the combustion occurs.

In this case too, the B constitutes the common element for the cathodic and the anodic flow and the atmosphere in the vessel, forming an equipotential point for the pressures of these three parts.

The main differences with the previous embodiment are the following ones:
- one ore more stacks can be contained in the same vessel
- one or more stack can be connected to the common point
- the internal environment of the vessel is at high temperature (~650°C)
- the internal atmosphere of the vessel is not inert but contains diluted air
- the vessel is not fed independently but from the cathodic gas itself.
- the B is placed inside the vessel

The overpressure condition of the vessel can be reestablished by means of the scheme in fig. 3, where the vessel is fed with the same mixture of the cathodic inlet. The cathodic and anodic outlets are both carried to the B by means of conducts. The vessel is always in conditions of overpressure over the stack(s).

## Claims

1. Molten carbonate fuel cell power plant system comprising:
- a containment vessel
- one or more molten carbonate fuel cell stack(s), enclosed within said containment vessel
- a burner in which a mixture of anodic exhaust, cathodic exhaust and vessel exhaust is combusted to produce a burner exhaust stream
- means for maintaining the system pressurised
- means for maintaining a differential pressure between the containment vessel and fuel and oxidant streams to prevent leakage of fuel and oxidant from fuel cell stack;
**characterized in that** pressure sensing means and pressure controlling means are provided downstream the burner for balancing and equilibrating the pressure of the anode, the cathode and the vessel exits.

2. Fuel cell power plant according to claim 1, wherein said burner is a catalytic burner.

3. Fuel cell power plant according to claim 1 or 2, wherein the differential pressure between the containment vessel and the fuel and oxidant streams is positive.

4. Fuel cell power plant according to one of the claims 1 to 3,
wherein the means for maintaining the system pressurised comprise a control valve (V2) downstream the burner, a pressure sensor and a pressure controller.

5. Fuel stack power plant according to the claims 1 and 2,
wherein said burner (B) is placed inside said containment vessel (11).

6. Fuel cell power plant according to claim 5 wherein the differential pressure between the containment vessel and the fuel and oxidant streams is negative.

7. Fuel cell power plant according to claim 5 or 6 wherein the means for maintaining the system pressurised comprise means for sensing the system pressure and means for providing control signal indicative of said pressure.

8. Method for operating a molten carbonate fuel cell stack system according to the claims 1 to 7, comprising the steps of:
- electrochemically reacting a pressurised fuel stream and a pressurised oxidant stream in the fuel stack(s) to produce electricity, anodic exhaust stream and cathodic exhaust stream;
- combusting in the reference burner a mixture of anodic exhaust, cathodic exhaust and vessel exhaust to produce a combustion exhaust stream.
- maintaining under control the required differential pressure between the containment vessel and the fuel cell stack;
- maintaining minimal the anode-cathode differential pressure during the functioning;
- balancing and equilibrating the pressure of the anode, the cathode and the vessel exits by means of pressure sensing means and pressure controlling means that are provided downstream the burner.

9. Method according to claim 8,
further comprising the steps of
- sensing the system pressure
- providing a signal indicative of such sensed pressure, and
- controlling the pressure of the combustor exhaust stream so that the system pressure is constantly at a desired value.

10. Method according to claim 8 or 9,
wherein said mixture of anodic exhaust, cathodic exhaust and vessel exhaust is combusted in said burner

## Patentansprüche

1. Schmelzkarbonat-Brennstoffzellen-Kraftwerkssystem, umfassend:
- einen Containmentbehälter
- einen oder mehrere Schmelzkarbonat-Brennstoffzellenstapel, die innerhalb des Containmentbehälters umschlossen sind
- einen Brenner, in dem ein Gemisch aus anodischem Abgas, kathodischem Abgas sowie Behälterabgas verbrennt wird, um einen Brennerabgasstrom zu erzeugen
- Mittel, um das System unter Druck zu halten
- Mittel, um einen Differenzdruck zwischen dem Containmentbehälter und dem Kraftstoff- und Oxidansstrom aufrechtzuerhalten, umso eine Leakage an Brennstoff und Oxidans aus dem Brennstoffzellenstapel zu verhindern;
**dadurch gekennzeichnet, dass** Drucksensiermittel und Drucksteuermittel stromabwärts des Brenners vorgesehen sind zum Abgleichen sowie Equilibrieren des Druckes am Ausgang der Anode, der Kathode und des Behälters.

2. Brennstoffzellenkraftwerk nach Anspruch 1, bei dem der Brenner ein katalytischer Brenner ist.

3. Brennstoffzellenkraftwerk nach Anspruch 1 oder 2, bei dem der Differenzdruck zwischen dem Containmentbehälter und dem Kraftstoff- und Oxidansstrom positiv ist.

4. Brennstoffzellenkraftwerk nach einem der Ansprüche 1 bis 3, bei dem das Mittel, um das System unter Druck zu halten, ein Steuerventil (V2) stromabwärts des Brenners, einen Drucksensor und ein Drucksteuergerät aufweist.

5. Brennstoffzellenkraftwerk nach Anspruch 1 und 2, bei dem der Brenner (B) innerhalb des Containmentbehälters (11) angeordnet ist.

6. Brennstoffzellenkraftwerk nach Anspruch 5, bei dem der Differenzdruck zwischen dem Containmentbehälter und dem Kraftstoffund Oxidansstrom negativ ist.

7. Brennstoffzellenkraftwerk nach Anspruch 5 oder 6, bei dem das Mittel, um das System unter Druck zu halten, ein Mittel zum Sensieren des Systemdruckes und ein Mittel zum Vorsehen eines Steuersignals, welches den Druck anzeigt, aufweist.

8. Verfahren zum Betreiben eines Schmelzkarbonat-Brennstoffzellenstapelsystems nach den Ansprüchen 1 bis 7, mit den Schritten:
- elektrochemisches Reagieren eines unter Druck gesetzten Kraftstoffstromes und eines unter Druck gesetzten Oxidansstromes in dem (den) Brennstoffstapel(n), um Elektrizität, einen anodischen Abgasstrom und einen kathodischen Abgasstrom zu erzeugen;
- Verbrennen eines Gemisches aus anodischem Abgas, kathodischem Abgas und Behälterabgas in dem Referenzbrenner, um einen Verbrennungsabgasstrom zu erzeugen;
- gesteuertes Aufrechterhalten des erforderlichen Differenzdruckes zwischen dem Containmentbehälter und dem Brennstoffzellenstapel;
- Halten des Anode-Kathode Differenzdruckes während des Betriebs auf einem Minimum;
- Abgleichen und Equilibrieren des Druckes am Ausgang der Anode, der Kathode und des Behälters mit Hilfe eines Drucksensiermittels und eines Drucksteuermittels, die stromabwärts des Brenners vorgesehen sind.

9. Verfahren nach Anspruch 8, des Weiteren mit den Schritten:
- Sensieren des Systemdruckes
- Vorsehen eines Signals, welches den sensierten Druck anzeigt, und
- Steuern des Druckes des Verbrennungsabgasstromes derart, dass der Systemdruck konstant einen Soll-Wert hat.

10. Verfahren nach Anspruch 8 oder 9, bei dem das Gemisch aus anodischem Abgas, kathodischem Abgas und Behälterabgas in dem Brenner verbrennt wird.

## Revendications

1. Système pour centrale électrique à piles à combustible à carbonates fondus comprenant :
✔ une cuve de confinement ;
✔ une ou plusieurs piles de piles à combustible à carbonates fondus, enfermées à l'intérieur de ladite cuve de confinement,
✔ un brûleur dans lequel un mélange d'échappement anodique, d'échappement cathodique et d'échappement de cuve est brûlé pour produire un flux d'échappement de brûleur ;
✔ des moyens pour maintenir le système sous pression ;
✔ des moyens pour maintenir une pression différentielle entre la cuve de confinement et les flux de combustible et d'oxydant pour empêcher la fuite du combustible et de l'oxydant de la pile de piles à combustible ;
**caractérisé en ce que** des moyens de détection de pression et des moyens de contrôle de pression sont prévus en aval du brûleur pour compenser et équilibrer la pression des sorties d'anode, de cathode et de la cuve.

2. Centrale électrique à piles à combustible selon la revendication 1, dans laquelle ledit brûleur est un brûleur catalytique.

3. Centrale électrique à piles à combustible selon la revendication 1 ou 2, dans laquelle la pression différentielle entre la cuve de confinement et les flux de combustible et d'oxydant est positive.

4. Centrale électrique à piles à combustible selon l'une quelconque des revendications 1 à 3, dans laquelle les moyens pour maintenir le système sous pression comprennent une soupape de commande (V2) en aval du brûleur, un capteur de pression et un contrôleur de pression.

5. Centrale électrique à piles à combustible selon les revendications 1 et 2, dans laquelle ledit brûleur (B) est placé à l'intérieur de ladite cuve de confinement (11).

6. Centrale électrique à piles à combustible selon la revendication 5, dans laquelle la pression différentielle entre la cuve de confinement et les flux de combustible et d'oxydant est négative.

7. Centrale électrique à piles à combustible selon la revendication 5 ou 6, dans laquelle les moyens pour maintenir le système sous pression comprennent des moyens pour détecter la pression du système et des moyens pour fournir un signal de commande indiquant ladite pression.

8. Procédé pour actionner un système de pile de piles à combustible à carbonates fondus selon les revendications 1 à 7, comprenant les étapes consistant à:
✔ faire réagir de manière électrochimique un flux de combustible sous pression et un flux d'oxydant sous pression dans la (les) pile(s) à combustible pour produire de l'électricité, le flux d'échappement anodique et le flux d'échappement cathodique ;
✔ brûler dans le brûleur de référence, un mélange d'échappement anodique, d'échappement cathodique et d'échappement de cuve pour produire un flux d'échappement de combustion ;
✔ maintenir sous contrôle la pression différentielle requise entre la cuve de confinement et la pile de piles à combustible ;
✔ maintenir au minimum la pression différentielle anode-cathode pendant le fonctionnement ;
✔ compenser et équilibrer la pression des sorties d'anode, de cathode et de cuve au moyen des moyens de détection de pression et des moyens de contrôle de pression qui sont prévus en aval du brûleur.

9. Procédé selon la revendication 8, comprenant en outre les étapes consistant à :
✔ détecter la pression du système ;
✔ prévoir un signal indiquant une telle pression détectée, et
✔ contrôleur la pression du flux d'échappement de la chambre de combustion de sorte que la pression du système est constamment à une valeur souhaitée.

10. Procédé selon la revendication 8 ou 9, dans lequel ledit mélange d'échappement anodique, d'échappement cathodique et d'échappement de cuve est brûlé dans ledit brûleur.
